# EUROPÄISCHE PATENTSCHRIFT

(11) **EP 1 869 319 B1**
(45) Veröffentlichungstag und Bekanntmachung des Hinweises auf die Patenterteilung: **23.11.2011**
(21) Anmeldenummer: 06724299.0
(22) Anmeldetag: 12.04.2006
(51) Int. Cl.: F04B 1/04, F04B 53/10

(54) **KOLBENPUMPE FÜR EINE FAHRZEUGBREMSANLAGE**
PISTON PUMP FOR A VEHICLE BRAKE SYSTEM
POMPE A PISTON POUR MECANISME DE FREINAGE DE VEHICULE

(30) Priorität: 14.04.2005 DE 102005017283
(43) Veröffentlichungstag der Anmeldung: 26.12.2007
(73) Patentinhaber: Lucas Automotive GmbH, 56070 Koblenz (DE)
(72) Erfinder: GEGALSKI, Helmut, 56218 Mühlheim-Kärlich (DE)
(74) Vertreter: Röthinger, Rainer
(86) Internationale Anmeldenummer: PCT/EP2006/003399
(87) Internationale Veröffentlichungsnummer: WO 2006/108653

(56) Entgegenhaltungen:
- DE-A1- 3 236 536
- DE-A1- 4 316 986
- DE-A1- 10 035 537
- GB-A- 602 612
- US-A- 5 213 482
- US-A- 5 540 570
- US-A- 5 688 113

## Beschreibung

### Gebiet der Erfindung

Die Erfindung betrifft eine Kolbenpumpe. Genauer gesagt betrifft die Erfindung eine Kolbenpumpe zum Fördern eines Hydraulikfluids innerhalb einer Fahrzeugbremsanlage.

### Hintergrund der Erfindung

Moderne hydraulische oder elektrohydraulische Fahrzeugbremsanlagen benötigen zuverlässige Druckerzeugungsmechanismen, um sicherheitsrelevante Funktionalitäten wie die eines hydraulischen Bremskraftverstärkersystems, eines Antiblockiersystems (ABS), eines Abstandsregelungssystems (ACC) oder eines Antriebsschlupf-Regelsystems (ASR) realisieren zu können. Bei diesen Systemen wird mittels eines Druckerzeugers - typischerweise einer Kolbenpumpe - ein Hydraulikdruck zur Ansteuerung einer oder mehrerer Radbremsen erzeugt.

Kolbenpumpen für Fahrzeugbremsanlagen umfassen häufig mehrere Kolben. Die Kolben sind jeweils in einer Kolbenkammer angeordnet und fördern ein Hydraulikfluid von einem Kammereinlass zu einem Kammerauslass. In einem Fluidförderweg zwischen dem Einlass und dem Auslass ist zumeist ein Fluidiksteuerelement in Gestalt beispielsweise einer Ventilbaugruppe angeordnet.

Bis vor wenigen Jahren war jede Kammer von einer Gleitbuchse begrenzt, die ortsfest innerhalb eines Pumpengehäuses aufgenommen war. Die Kolben bewegten sich verschleißminimiert innerhalb der Gleitbuchsen. Eine derartige Kolbenpumpe ist beispielsweise aus der DE 32 36 536 A oder der DE 100 35 537 A bekannt.

Die Verwendung von Gleitbuchsen erforderte, dass die Gleitbuchsen mit den darin aufgenommenen Kolben zunächst als Unterbaugruppen gefertigt und anschließend in das Pumpengehäuse eingesetzt wurden. Nachteilhaft hierbei war nicht nur die aufwändige Pumpenmontage, sondern auch die Anzahl der verwendeten Bauteile. Basierend auf der Erkenntnis, dass die maximale Laufdauer von Pumpen für die oben genannten Einsatzzwecke (über die Lebenszeit der Pumpe hinweg) häufig nur wenige zehn Stunden beträgt, Verschleiß also keine tragende Rolle spielt, wird in der DE 93 19 462 vorgeschlagen, auf die verschleißmindernd wirkenden Gleitbuchsen zu verzichten. Stattdessen werden der Pumpenkolben, eine hierfür vorgesehene Rückstellfeder sowie eine Ventilbaugruppe als eigenständig handhabbare Unterbaugruppe hülsenlos in eine im Pumpengehäuse ausgebildete Kammer eingesetzt. Am Kolben ist ein Dichtring befestigt, der verhindert, dass Hydraulikfluid zwischen dem Kolben und der Kammerwand hindurch zum Betätigungsmechanismus für den Kolben gelangt.

In neuerer Zeit hat sich gezeigt, dass Kolbenpumpen für immer mehr Funktionen innerhalb einer Fahrzeugbremsanlage eingesetzt werden können und sollen. Aus diesem Grund nehmen die zu erwartenden Pumpenlaufdauern zu und übersteigen in vielen Fällen die wenigen zehn Stunden, für welche die Kolbenpumpe gemäß der DE 93 19 462 ausgelegt ist. So werden derzeit Forderungen laut, dass Kolbenpumpen über ihre Lebenszeit hinweg für Laufdauern von 250 und mehr Stunden ausgelegt sein müssen. Der mit solch hohen Laufdauern einhergehende Verschleiß führt dazu, dass wieder über die Verwendung von Gleitbuchsen nachgedacht wird. Die als überwunden gedachten Nachteile von Gleitbuchsen werden dabei offenbar wieder in Kauf genommen.

Der Erfindung liegt die Aufgabe zugrunde, eine verschleißarme Kolbenpumpe anzugeben, bei der erforderlichenfalls ein Verzicht auf Gleitbuchsen möglich ist.

### Kurzer Abriss der Erfindung

Erfindungsgemäß wird eine Kolbenpumpe zum Fördern eines Hydraulikfluids innerhalb einer Fahrzeugbremsanlage bereitgestellt. Die erfindungsgemäße Kolbenpumpe umfasst wenigstens eine Kammer mit einem Einlass und einem Auslass für das Hydraulikfluid, einen innerhalb der Kammer geführt beweglichen Kolben, um das Hydraulikfluid entlang eines Förderwegs vom Einlass zum Auslass zu fördern, eine innerhalb des Förderwegs zwischen dem Einlass und dem Auslass angeordnete Fluidiksteuereinrichtung und ein in der Kammer aufgenommenes Dichtelement zum fluiddichten Abschluss der Kammer bezüglich eines Betätigungsmechanismus für den Kolben, wobei der Kolben relativ zum Dichtelement beweglich ist.

Bei dieser Ausgestaltung der Kolbenpumpe kann auf das Vorsehen von Gleitbuchsen verzichtet werden. Jede Kammer kann also unmittelbar von einem Pumpengehäuse (beispielsweise in Gestalt eines massiven Metallblocks) begrenzt sein. Obwohl eine hülsenlose Ausbildung bevorzugt ist, kann je nach Einsatzzweck und zu erwartender Laufdauer erforderlichenfalls auf Gleithülsen zurückgegriffen werden. Die Kolbenpumpe kann innerhalb eines gemeinsamen Gehäuseblocks zwei, drei oder mehr Kammer/Kolben-Einheiten umfassen.

Jede Kammer kann in zwei, drei oder mehr Kammerteile untergliedert sein. Die einzelnen Kammerteile können sich in ihrem Durchmesser und/oder in ihrer Funktion (z.B. was die Aufnahme des Hydraulikfluids anbelangt) unterscheiden. So kann die Kammer einen ersten Kammerteil und einen zweiten Kammerteil aufweisen, wobei der erste Kammerteil in Richtung auf den Betätigungsmechanismus geöffnet ist und im zweiten Kammerteil der Einlass sowie der Auslass angeordnet sind. Das Dichtelement ist zweckmäßigerweise in einem Bereich zwischen dem ersten Kammerteil und dem zweiten Kammerteil vorgesehen.

Auch der Kolben kann in axialer Richtung in zwei, drei oder mehr Abschnitte untergliedert sein. Die einzelnen Kolbenabschnitte können miteinander verbunden sein, lose aneinander anliegen oder gegeneinander vorgespannt sein. Gemäß einer ersten Variante bestehen die einzelnen Kolbenabschnitte aus dem gleichen Material. Gemäß einer zweiten Variante sind ein erster Kolbenabschnitt und ein zweiter Kolbenabschnitt zumindest bereichsweise (z.B. radial außen und/oder an Stirnflächen) aus unterschiedlichen Materialien gefertigt. So kann der erste Abschnitt aus einem verschleißfesten, insbesondere metallischen Material gefertigt sein und zum Zusammenwirken mit dem Betätigungsmechanismus und/oder dem Dichtelement ausgebildet sein. Der zweite Kolbenabschnitt kann ein geräuschunterdrückendes Material wie Kunststoff umfassen und die Fluidiksteuereinrichtung bilden oder zumindest teilweise enthalten. Der erste Kolbenabschnitt kann zumindest bereichsweise im ersten Kammerteil und der zweite Kolbenabschnitt im zweiten Kammerteile aufgenommen sein.

Zur Stabilisierung des Dichtelements innerhalb der Kammer kann in der Kammer wenigstens eine Anlagefläche für das Dichtelement vorhanden sein. Es kann daran gedacht werden, das Dichtelement zwischen zwei gegenüberliegenden Anlageflächen ortsfest zu fixieren. Eine erste Anlagefläche kann in diesem Fall von einer in der Kammer ausgebildeten Stufe gebildet sein. Eine der ersten Anlagefläche gegenüberliegende zweite Anlagefläche kann von einem in die Kammer eingebrachten Rückhalteelement bereitgestellt werden.

Die Kolbenpumpe kann je nach Anwendungsbereich eine Radialkolbenpumpe oder eine Axialkolbenpumpe sein. Bei einer Radialkolbenpumpe erstreckt sich der wenigstens eine Kolben in radialer Richtung bezüglich einer Antriebsachse des Betätigungsmechanismus. Bei einer Axialkolbenpumpe erstreckt sich der wenigstens eine Kolben hingegen im Wesentlichen parallel zur Antriebsachse.

### Kurze Beschreibung der Zeichnungen

Weitere Einzelheiten und Vorteile der Erfindung ergeben sich aus der nachfolgenden Beschreibung eines bevorzugten Ausführungsbeispiels sowie aus den Figuren. Es zeigen:
- Fig. 1: ein Ausführungsbeispiel einer erfindungsgemäßen Kolbenpumpe in einer perspektivischen Ansicht; und
- Fig. 2: einen Längsschnitt durch eine Kolbenkammer der Kolbenpumpe gemäß Fig. 1.

### Beschreibung eines bevorzugten Ausführungsbeispiels

Im Folgenden wird ein Ausführungsbeispiel eines Druckerzeugers in Gestalt einer Mehrkolbenpumpe für den Einsatz in hydraulischen oder elektrohydraulischen Fahrzeugbremsanlagen beschrieben. Die vorgestellte Mehrkolbenpumpe liefert den zur Ansteuerung einer oder mehrerer Radbremsen benötigten hydraulischen Druck und kann Bestandteil eines hydraulischen Bremskraftverstärkungssystems oder einer ABS-, ASR-, ACC- oder VSC- (Vehicle Stability Control, auch als ESP bezeichnet) Regeleinrichtung sein.

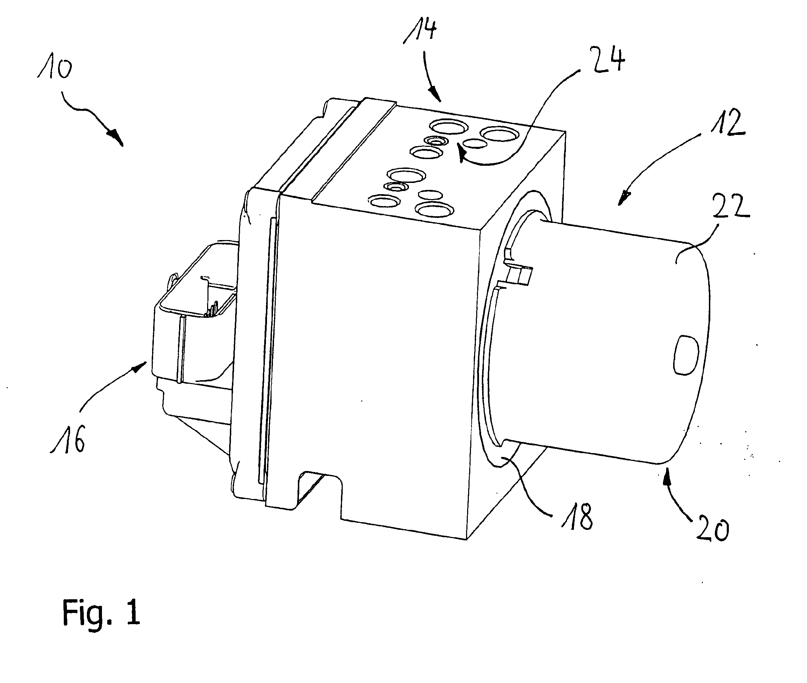

Fig. 1 zeigt eine perspektivische Ansicht eines Ausführungsbeispiels einer Radial-Mehrkolbenpumpe 10 für eine Fahrzeugbremsanlage in fertig montiertem Zustand. Die Mehrkolbenpumpe 10 eignet sich beispielsweise zur Implementierung einer VSC-Regeleinrichtung.

Die Mehrkolbenpumpe 10 gemäß Fig. 1 umfasst eine eigenständig handhabbare Pumpen-Unterbaugruppe 12, die bereichsweise in einem Aufnahmegehäuse 14 in Gestalt eines massiven Aluminiumblocks mit darin ausgebildeten Fluidleitungen und mit in den Fluidleitungen angeordneten Fluidiksteuereinrichtungen aufgenommen ist. Als dritte übergeordnete Komponente umfasst die Mehrkolbenpumpe 10 eine am Gehäuse 14 befestigte Einheit 16 für die Kontaktierung der elektrischen Komponenten der Mehrkolbenpumpe 10.

Die in das Gehäuse 14 abschnittsweise eingefügte Pumpen-Unterbaugruppe 12 besitzt einen in Fig. 1 nur teilweise sichtbaren, kreisringförmigen Block 18 aus einem verschleißfesten Material wie Aluminium (Stahl oder Grauguss wären jedoch ebenfalls geeignet). Innerhalb des Blocks 18 sind typischerweise 2 bis 6 sternförmig angeordnete Pumpenkammern (nicht dargestellt) ausgebildet.

Wie Fig. 1 entnommen werden kann, ist am Block 18 eine Betätigungseinheit 20 der Mehrkolbenpumpe 10 befestigt. Die Betätigungseinheit 20 umfasst ein topfförmiges Gehäuse 22 sowie einen darin aufgenommenen Elektromotor (nicht dargestellt), dessen Antriebsachse sich im Wesentlichen koaxial zum Gehäuse 22 erstreckt.

Das Aufnahmegehäuse 14 für die Pumpen-Unterbaugruppe 12 besitzt an seiner Oberseite eine Mehrzahl von Fluidanschlüssen 24. In fertig montiertem Zustand der Mehrkolbenpumpe 10 wird die Mehrkolbenpumpe 10 mittels der Fluidanschlüsse 24 an eine Fluidquelle sowie an einen oder mehrere Hydraulikkreise angeschlossen.

Abweichend von der Darstellung in Fig. 1 könnte der Block 18 auch einstückig mit dem Gehäuse 14 ausgestaltet werden. In diesem Fall wären die Aufnahmekammern für die Kolben im Gehäuse 14 ausgebildet.

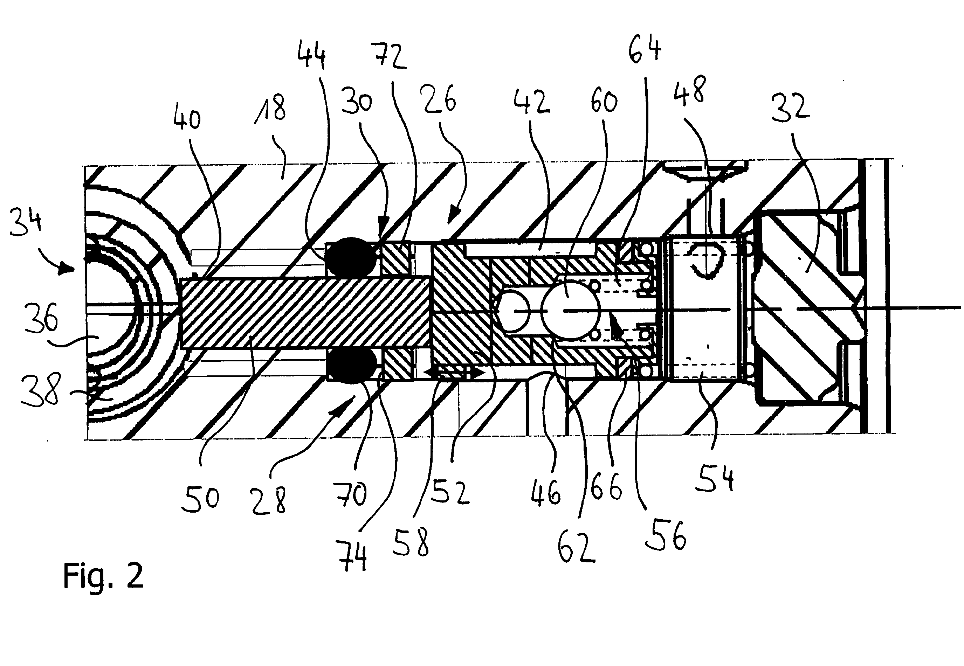

Fig. 2 zeigt im Längsschnitt eine der im Block 18 ausgebildeten Kammer/KolbenEinheiten 26. Die in Fig. 2 dargestellte Kammer/Kolben-Einheit 26 umfasst im Ausführungsbeispiel eine zweigeteilte Kammer 28 sowie einen aus zwei Abschnitten bestehenden Kolben 30.

Die Kammer 28 besitzt eine zylindrische Gestalt mit gestuftem Durchmesser. Eine an den radial äußeren Rand des Blocks 18 grenzende Stirnseite der Kammer 28 ist durch einen Stopfen 32 verschlossen. Die einem im Zentrum des Blocks 18 ausgebildeten Betätigungsmechanismus 34 zugewandte Stirnseite der Kammer 28 ist hingegen offen. Der Betätigungsmechanismus 34 umfasst eine Motorwelle 36 sowie einen auf die Motorwelle 36 aufgeflanschten Exzenter 38. Die Funktionsweise des Betätigungsmechanismus 34 wird später näher erläutert.

Die zweigeteilte Kammer 28 besitzt einen dem Betätigungsmechanismus 34 zugewandten ersten Kammerteil 40 sowie einen von dem Stopfen 32 verschlossenen zweiten Kammerteil 42. Der zum Betätigungsmechanismus 34 hin offene erste Kammerteil 40 weist einen kleineren Durchmesser als der zweite Kammerteil 42 auf. Im Übergangsbereich zwischen dem ersten Kammerteil 40 und dem zweiten Kammerteil 42 ist eine Stufe 44 ausgebildet.

Im zweiten Kammerteil 42 sind ein Fluideinlass 46 sowie ein Fluidauslass 48 vorgesehen. Der Einlass 46 und der Auslass 48 münden jeweils in einen entsprechenden Einlass- oder Auslasskanal innerhalb des Blocks 18.

Der innerhalb der Kammer 28 angeordnete Kolben 26 besitzt einen ersten Kolbenabschnitt 50 und einen zweiten Kolbenabschnitt 52. Wie sich aus Fig. 2 ergibt, erstreckt sich der erste Kolbenabschnitt 50 im Wesentlichen innerhalb des ersten Kammerteils 40 und ist darin geführt beweglich.

Der zweite Kolbenabschnitt 52 liegt lose am ersten Kolbenabschnitt 50 an, wird aber von einer sich am Stopfen 32 abstützenden Rückstellfeder 54 in Richtung auf den ersten Kolbenabschnitt 50 vorgespannt. Der erste Kolbenabschnitt 50 liegt mit seinem dem zweiten Kolbenabschnitt 52 gegenüberliegenden Ende federkraftbeaufschlagt (und zwar mittelbar von der Rückstellfeder 54) am Exzenter 38 des Betätigungsmechanismus 34 an. Der erste Kolbenabschnitt 50 besteht aus einem gehärteten zylindrischen Stahlkörper mit geschliffenen End- (und erforderlichenfalls Seiten-) Flächen. Der erste Kolbenabschnitt 50 kann beispielsweise von einem Nadellagerwälzkörper mit einem Durchmesser von ungefähr 5,0 mm gebildet sein.

Der zweite Kolbenabschnitt 52 ist innerhalb des zweiten Kammerteils 42 geführt beweglich, besteht aus Kunststoff oder Metall und nimmt eine Fluidiksteuereinrichtung 56 in Gestalt einer Ventilbaugruppe in sich auf. Der zweite Kolbenabschnitt 52 und die darin aufgenommene Ventilbaugruppe umfassen in bekannter Weise einen Fluiddurchgang 58, ein kugelförmiges Ventilelement 60 mit einem Durchmesser von ungefähr 3,5 mm, eine das Ventilelement 60 gegen einen Ventilsitz 62 vorspannende Feder 64 sowie ein hochdruckresistentes Dichtelement 66.

Innerhalb des zweiten Kammerteils 42 ist am Übergang zum ersten Kammerteil 40 ein Dichtelement 70 in Gestalt eines O-Rings angeordnet. Das Dichtelement 70 ist in axialer Richtung zwischen der Stufe 44 und einem in die Kammer eingebrachten, ringförmigen Rückhaltelement 72 ortsfest fixiert. Genauer gesagt fungiert die Stufe 44 als eine erste Anlagefläche für das Dichtelement 70 und das Rückhalteelement 72 stellt auf seiner dem Dichtelement 70 zugewandten Seite eine zweite Anlagefläche 74 für das Dichtelement 70 bereit.

Der Kolben 30 und insbesondere der erste Kolbenabschnitt 50 ist bezüglich des Dichtelements 70 beweglich. Anders ausgedrückt ist das Dichtelement 70 im vorliegenden Ausführungsbeispiel bezüglich der Kammer 28 im Wesentlichen ortsfest. Das Dichtelement 70 ist funktionell zwischen einer Begrenzungswand der Kammer 26 und dem beweglichen Kolben 30 angeordnet. Auf diese Weise gewährleistet das Dichtelement 70 einen fluiddichten Abschluss der Kammer 28 und insbesondere des zweiten Kammerabschnitts 42 bezüglich des Betätigungsmechanismus 34.

Bei einer Aktivierung des Betätigungsmechanismus 34 setzt der Exzenter 38 eine Rotationsbewegung der Antriebswelle 36 in eine zyklische Betätigung des Kolbens 28 um. Aufgrund der von dem Federelement 54 erzeugten Vorspannung bewegen sich die beiden Kolbenabschnitte 50 und 52 synchron. Eine vollständige Umdrehung der Antriebswelle 36 entspricht einem Förderhub. Im Rahmen eines Förderhubs wird unter Druck stehendes Hydraulikfluid vom Einlass 46 zum Auslass 48 gefördert. Die Fluidiksteuereinrichtung 56 unterstützt den Fluidtransport in Förderrichtung und unterbindet einen Fluidrückfluss. Während der Förderbewegung des Kolbens 28 gleitet der erste Kolbenabschnitt 50 entlang des Dichtelements 70. Das Dichtelement 70 verhindert somit einen Fluss des Hydraulikfluids aus dem zweiten Kammerteil 42 durch den ersten Kammerteil 40 zum Betätigungsmechanismus 34.

Im Gegensatz zu herkömmlichen Lösungen, bei denen sich die Dichtung zusammen mit dem Kolben entlang der Kammerwand bewegt, bewegt sich beim vorliegenden Ausführungsbeispiel der gehärtete erste Kolbenabschnitt 50 im Dichtelement 70. Auf diese Weise wird gewährleistet, dass die Laufpaarung Aluminium/Stahl im Bereich des ersten Kammerteils 40 und des ersten Kolbenabschnitts 50 nicht länger durch eine Aufnahmenut für ein Dichtelement bzw. das Dichtelement selbst gestört ist. Genau an diesen Stellen waren bislang häufig Ausfallerscheinungen zu beobachten, welche die Pumpenlaufdauern begrenzten. Mit der erfindungsgemäßen Anordnung iassen sich daher auch ohne Gleithülse Laufdauern von 250 Stunden und darüber erzielen.

Zudem ermöglicht die erfindungsgemäße Ausgestaltung eine Verringerung von Querkräften im Hochdruckbereich, also insbesondere im Bereich des zweiten Kammerteils 42. Ferner gestattet die Erfindung die Auftrennung herkömmlicher monolithischer Kolben in zwei separate Kolbenteile, die aus jeweils funktionsoptimierten, unterschiedlichen Materialen gefertigt werden können. Die Verwendung von gehärtetem und erforderlichenfalls geschliffenen Stahl für den ersten Kolbenabschnitt 50 verringert den Abrieb in Wechselwirkungsbereichen mit dem Exzenter 38 und mit der Kammerwand. Die Verwendung von Kunststoff für den zweiten Kolbenabschnitt 52 gestattet es, eine geräuscharme Ventilbaugruppe 56 zu realisieren.

## Patentansprüche

1. Kolbenpumpe (10) zum Fördern eines Hydraulikfluids innerhalb einer Fahrzeugbremsanlage, umfassend
- wenigstens eine Kammer (28) mit einem Einlass (46) und einem Auslass (48) für das Hydraulikfluid;
- einen innerhalb der Kammer (28) geführt beweglichen Kolben (30), um das Hydraulikfluid entlang eines Förderwegs vom Einlass (46) zum Auslass (48) zu fördern;
- ein innerhalb des Förderwegs zwischen dem Einlass (46) und dem Auslass (48) angeordnetes Ventil (56); und
- ein in der Kammer (28) aufgenommenes Dichtelement (70) zum fluiddichten Abschluss der Kammer (28) bezüglich eines Betätigungsmechanismus (34) für den Kolben (30),
**dadurch gekennzeichnet, dass** der Kolben (30) in axialer Richtung in einen ersten Abschnitt (50) und einen lose am ersten Abschnitt (50) anliegenden zweiten Abschnitt (52) untergliedert ist, wobei der zweite Abschnitt (52) federkraftbeaufschlagt am ersten Abschnitt (50) anliegt.

2. Kolbenpumpe nach Anspruch 1, **dadurch gekennzeichnet,**
**dass** die Kammer (28) unmittelbar von einem Pumpengehäuse (18) begrenzt ist.

3. Kolbenpumpe nach Anspruch 1 oder 2, **dadurch gekennzeichnet,**
**dass** die Kammer (28) einen ersten Kammerteil (40) und einen zweiten Kammerteil (42) aufweist, wobei der erste Kammerteil (40) in Richtung auf den Betätigungsmechanismus (34) geöffnet ist und im zweiten Kammerteil (42) der Einlass (46) sowie der Auslass (48) angeordnet sind und wobei das Dichtelement (70) in einem Bereich zwischen dem ersten Kammerteil (40) und dem zweiten Kammerteil (42) vorgesehen ist.

4. Kolbenpumpe nach einem der Ansprüche 1 bis 3, **dadurch gekennzeichnet, dass** der erste Abschnitt (50) und der zweite Abschnitt (52) zumindest bereichsweise aus unterschiedlichen Materialien gefertigt sind.

5. Kolbenpumpe nach Anspruch 4, **dadurch gekennzeichnet,**
**dass** der erste Abschnitt (50) aus einem verschleißfesten, insbesondere metallischen Material gefertigt ist und der zweite Abschnitt (52) ein geräuschunterdrückendes Material, insbesondere Kunststoff, enthält.

6. Kolbenpumpe nach einem der Ansprüche 1 bis 5, **dadurch gekennzeichnet, dass** der erste Abschnitt (50) des Kolbens (30) mit dem Betätigungsmechanismus (34) und/oder dem Dichtelement (70) zusammenwirkt.

7. Kolbenpumpe nach einem der Ansprüche 1 bis 6, **dadurch gekennzeichnet, dass** der zweite Abschnitt (52) des Kolbens (30) das Ventil (56) bildet oder zumindest teilweise enthält.

8. Kolbenpumpe nach einem der Ansprüche 3 bis 7, **dadurch gekennzeichnet, dass** der erste Abschnitt (50) des Kolbens (30) zumindest bereichsweise im ersten Kammerteil (40) und der zweite Abschnitt (52) des Kolbens (30) im zweiten Kammerteil (42) aufgenommen ist.

9. Kolbenpumpe nach einem der Ansprüche 1 bis 8, **dadurch gekennzeichnet, dass** in der Kammer (28) wenigstens eine Anlagefläche (44, 74) für das Dichtelement (70) vorhanden ist.

10. Kolbenpumpe nach Anspruch 9, **dadurch gekennzeichnet,**
**dass** in der Kammer (28) eine Stufe (44) vorhanden ist, die eine erste Anlagefläche für das Dichtelement (70) bildet.

11. Kolbenpumpe nach Anspruch 10, **dadurch gekennzeichnet,**
**dass** in die Kammer (28) ein Rückhalteelement (72) eingebracht ist, das eine der ersten Anlagefläche (44) gegenüberliegende zweite Anlagefläche (74) für das Dichtelement (70) besitzt.

12. Kolbenpumpe nach einem der Ansprüche 1 bis 11, **dadurch gekennzeichnet dass** die Kolbenpumpe (10) eine Radialkolbenpumpe ist.

13. Kolbenpumpe nach einem der Ansprüche 1 bis 11, **dadurch gekennzeichnet, dass** die Kolbenpumpe eine Axialkolbenpumpe ist

14. Kolbenpumpe nach einem der Ansprüche 1 bis 13, **dadurch gekennzeichnet, dass** die Pumpe (10) innerhalb eines gemeinsamen Gehäuseblocks (18) wenigstens zwei Kammer/Kolben-Einheiten (26) umfasst.

15. Kolbenpumpe nach einem der Ansprüche 1 bis 14, **dadurch gekennzeichnet, dass** der Kolben (30) relativ zum Dichtelement (70) beweglich ist.

16. Verwendung der Kolbenpumpe (10) nach einem der Ansprüche 1 bis 15 als Bestandteil einer Fahrzeugbremsanlage zur Förderung eines Hydraulikfluids.

## Claims

1. A piston pump (10) for conveying a hydraulic fluid in a vehicle braking system, comprising
- at least one chamber (28) having an inlet (46) and an outlet (48) for the hydraulic fluid;
- a piston (30) movable in a guided manner in the chamber (28) in order to convey the hydraulic fluid along a conveying path from the inlet (46) to the outlet (48):
- a valve (56) which is arranged in the conveying path between the inlet (46) and the outlet (48); and
- a sealing element (70) which is received in the chamber (28) in order to close the chamber (28) in a fluid-tight manner relative to an activation mechanism (34) for the piston (30),
**characterized in that** the piston (30) is subdivided in an axial direction into a first portion (50) and a second portion (52), which loosely abuts the first portion (50), the second portion (52) being abutting the first portion (50) in a resiliently loaded manner.

2. The piston pump of claim 1, **characterized in that** the chamber (28) is directly delimited by a pump housing (18).

3. The piston pump according to claim 1 or 2, **characterized in that** the chamber (28) has a first chamber portion (40) and a second chamber portion (42), the first chamber portion (40) being opened in the direction towards the activation mechanism (34) and both the inlet (46) and the outlet (48) being arranged in the second chamber portion (42), and the sealing element (70) being provided in a region between the first chamber portion (40) and the second chamber portion (42).

4. The piston pump according to any one of claims 1 to 3, **characterized in that** the first portion (50) and the second portion (52) are at least partially manufactured from different materials.

5. The piston pump according to claim 4, **characterized in that** the first portion (50) is manufactured from a wear-resistant, in particular metal, material and the second portion (52) contains a noise-damping material, in particular plastics material.

6. The piston pump according to any one of claims 1 to 5, **characterized in that** the first portion (50) of the piston (30) co-operates with the activation mechanism (34) and/or the sealing element (70).

7. The piston pump according to any one of claims 1 to 6, **characterized in that** the second portion (52) of the piston (30) forms or at least partially contains the valve (56).

8. The piston pump according to any one of claims 3 to 7, **characterized in that** the first portion (50) of the piston (30) is at least partially received in the first chamber portion (40) and the second portion (52) of the piston (30) is received in the second chamber portion (42).

9. The piston pump according to any one of claims 1 to 8, **characterized in that** in the chamber (28) at least one abutment face (44, 74) is provided for the sealing element (70).

10. The piston pump according to claim 9, **characterized in that** a step (44) is provided in the chamber (28) and forms a first abutment face for the sealing element (70).

11. The piston pump according to claim 10, **characterized in that** a retaining element (72) is introduced into the chamber (28) having a second abutment face (74) opposite the first abutment face (44) for the sealing element (70).

12. The piston pump according to any one of claims 1 to 11, **characterized in that** the piston pump (10) is a radial piston pump.

13. The piston pump according to any one of claims 1 to 11, **characterized in that** the piston pump is an axial piston pump.

14. The piston pump according to any one of claims 1 to 13, **characterized in that** the pump (10) comprises at least two chamber/piston units (26) in a common housing block (18).

15. The piston pump according to any one of claims 1 to 14, **characterized in that** the piston (30) is movable relative to the sealing element (70).

16. Use of the piston pump (10) according to any one of claims 1 to 15 as component of a vehicle braking system for conveying a hydraulic fluid.

## Revendications

1. Pompe à piston (10) pour l'acheminement d'un fluide hydraulique à l'intérieur d'un système de freinage de véhicule automobile, comportant :
- au moins une chambre (28) pourvue d'une entrée (46) et d'une sortie (48) de fluide hydraulique,
- un piston (30) pouvant se déplacer de manière guidée dans la chambre (28) pour acheminer le fluide hydraulique le long d'un chemin de transport de ladite entrée (46) à ladite sortie (48),
- une soupape (56) disposée dans le chemin de transport entre ladite entrée (46) et ladite sortie (48),
- un élément d'étanchéité (70) logé dans la chambre (28) pour assurer l'étanchéité aux fluides de la chambre (28) par rapport à un mécanisme d'actionnement (34) pour le piston (30),
**caractérisée en ce que** le piston (30) est, dans la direction axiale, subdivisé en un premier segment (50) et un deuxième segment (52) appliqué de façon amovible contre le premier segment (50), le deuxième segment (52) étant appliqué contre le premier segment (50) par la force d'un ressort.

2. Pompe à piston selon la revendication 1, **caractérisée en ce que** la chambre (28) est directement limitée par un carter de pompe (18).

3. Pompe à piston selon la revendication 1 ou 2, **caractérisée en ce que** la chambre (28) présente une première partie de chambre (40) et une deuxième partie de chambre (42), la première partie de chambre (40) étant ouverte dans la direction donnant sur le mécanisme d'actionnement (34), et ladite entrée (46) et ladite sortie (48) étant disposées dans la deuxième partie de chambre (42) et l'élément d'étanchéité (70) étant prévu dans la zone comprise entre la première partie de chambre (40) et la deuxième partie de chambre (42).

4. Pompe à piston selon l'une des revendications 1 à 3, **caractérisée en ce que** le premier segment (50) et le deuxième segment (52) sont réalisés au moins pour partie à partir de matériaux différents.

5. Pompe à piston selon la revendication 4, **caractérisée en ce que** le premier segment (50) est réalisé à partir d'un matériau résistant à l'usure, en particulier à partir d'un matériau métallique, et le deuxième segment (52) contient un matériau supprimant les bruits, en particulier un matériau plastique.

6. Pompe à piston selon l'une des revendications 1 à 5, **caractérisée en ce que** le premier segment (50) du piston (30) coopère avec le mécanisme d'actionnement (34) et/ou l'élément d'étanchéité (70).

7. Pompe à piston selon l'une des revendications 1 à 6, **caractérisée en ce que** le deuxième segment (52) du piston (30) forme la soupape (56) ou contient celle-ci pour le moins partiellement.

8. Pompe à piston selon l'une des revendications 3 à 7, **caractérisée en ce que** le premier segment (50) du piston (30) est logé pour le moins partiellement dans la première partie de chambre (40), et le deuxième segment (52) du piston (30), dans la deuxième partie de chambre (42).

9. Pompe à piston selon l'une des revendications 1 à 8, **caractérisée en ce qu'**il existe dans la chambre (28) au moins une surface de contact (44, 74) pour l'élément d'étanchéité (70).

10. Pompe à piston selon la revendication 9, **caractérisée en ce qu'**il existe dans la chambre (28) un gradin (44) formant une première surface de contact pour l'élément d'étanchéité (70).

11. Pompe à piston selon la revendication 10, **caractérisée en ce qu'**il est incorporé dans la chambre (28) un élément de retenue (72) qui possède pour l'élément d'étanchéité (70) une deuxième surface de contact (74) opposée à la première surface de contact (44).

12. Pompe à piston selon l'une des revendications 1 à 11, **caractérisée en ce que** la pompe à piston (10) est une pompe à piston radial.

13. Pompe à piston selon l'une des revendications 1 à 11, **caractérisée en ce que** la pompe à piston est une pompe à piston axiale.

14. Pompe à piston selon l'une des revendications 1 à 13, **caractérisée en ce que** la pompe (10) comporte au moins deux unités de chambre/piston (26) à l'intérieur d'un bloc carter (18) commun.

15. Pompe à piston selon l'une des revendications 1 à 14, **caractérisée en ce que** le piston (30) est déplaçable par rapport à l'élément d'étanchéité (70).

16. Utilisation de la pompe à piston selon l'une des revendications 1 à 15 en tant que composant d'un système de frein de véhicule automobile pour l'acheminement d'un fluide hydraulique.
